# EUROPEAN PATENT APPLICATION

(11) **EP 3 466 252 A1**
(43) Date of publication of application: **10.04.2019**
(21) Application number: 16903081.4
(22) Date of filing: 24.05.2016
(51) Int. Cl.: A01K 23/00, E01H 1/12

(54) **EXCREMENT DISPOSAL BAG**

(71) Applicant: Phoenixeinzel Co., Ltd., Tokyo 103-0002 (JP)
(72) Inventor: HARUYAMA, Shuuichiro, Tokyo 103-0002 (JP); KOISO, Toshiyuki, Tokyo 103-0002 (JP); OONOBU, Hideki, Tokyo 103-0002 (JP)
(74) Representative: Fleck, Hermann-Josef
(86) International application number: PCT/JP2016/065292
(87) International publication number: WO 2017/203599

(57) **Abstract**

Provided is an excrement disposal bag that is easy to handle and able to be produced at low cost. This excrement disposal bag comprises a first bag composed of water-soluble paper and a second bag, which is made of a synthetic resin, which is housed in the first bag, and which is provided with folded portions at both lateral sides thereof, the excrement disposal bag being characterized in that, in a state in which the folded portions of the second bag are unfolded outward so that the first bag and the second bag are both made to flatten out, the outer width of the second bag falls within a range of 1.02-1.2 times the inner width of the first bag, while the height of the second bag from an outer bottom edge to an opening edge falls within a range of 1.4-1.6 times the inner depth of the first bag.

## Description

### [Technical Field]

The present invention relates to an excrement disposal bag for handling pets and other feces such as dogs and cats.

### [Background Art]

Generally, it is regarded as an owner's moral that an owner handles pets feces when taking a walk with pets such as dogs or cats. However, handling of pets feces is troublesome and is necessary every day, so there is needs for pets owner such as dogs to be able to easily handle feces.

Conventionally, it is known an excrement disposal bag formed into a double structure of an inner bag made of synthetic resin sheets and an outer bag made of soft paper, and reversing the inner bag and the outer bag integrally and using them. (See patent literature 1.)

In the excrement disposal bag disclosed in patent literature 1, the inner bag and the outer bag are joined together to prevent the outer bag made of soft paper falling off from the inner bag made of synthetic resin sheets, and it can be separated after reversal.

However, when the inner bag and the outer bag are joined together, there is a case that one bag is broken and stuck to the other bag when separating later. Therefore, there is a problem that it is difficult to separate the garbage.

Also, it is known an excrement disposal bag for pets which can easily remove pets feces such as dogs. (See patent literature 2.) This is to accommodate an inner bag made of polyethylene having a folded portion inside the outer bag made of paper and reversing the outer bag and the inner bag so as to handle feces.

However, in the excrement disposal bag for pets disclosed in patent literature 2, adequate size regarding a width and a height of the inner bag and the outer bag has not been sufficiently considered. Therefore, when the height of the inner bag is set to be higher than necessary, the material cost is increased, and conversely, if it is set lower, there is a problem that it is difficult to handle when reverting.

Further, if the inner bag is set with a narrow width, the outer bag is detached from the inner bag when the feces are picked up, whereas if it is widely set, there is a problem that the material cost becomes high.

### [Prior Art]

### [Patent literature]

[Patent literature 1] JP,1990-040768,Y
[Patent literature 2] JP,2004-049110,A

### [Outline of the Invention]

### [Problems to be Solved by the Invention]

In view of the above circumstances, it is an object of the present invention to provide an excrement disposal bag which is easy to handle and can be manufactured at low cost.

### [Means to Solve the Objects]

In order to achieve the above object, the excrement disposal bag of the present invention comprises a first bag made of water-soluble paper, and a second bag made of synthetic resin and accommodated in the first bag and provided with folded portions at both sides thereof, under the condition that when the folded portions of the second bag are unfolded outward so that the first bag and the second bag are both made to flatten out, an outer width of the second bag falls within a range of 1.01 to 1.25 times an inner width of the first bag, and a height from the outer bottom edge to the opening edge of the second bag falls within a range of 1.3 to 1.7 times an inner depth of the first bag.

Here, the excrement includes feces of pets such as dogs, but it is not limited thereto, and excreta of human and other feces are included.

The height from the bottom edge to the opening edge of the second bag is set when inverting the inner and outer sides of the first bag and the second bag, it is necessary to be provided at such the height that the hands are not soiled and can reliably contain excrement after reversal. However, if it is too high, the manufacturing cost will be higher, and more difficult to handle.

And, if the height from the bottom edge to the opening edge of the second bag is less than 1.3 times the height of the inside of the first bag, the hand may become dirty, there is a possibility of leaking out of the bag, and if it exceeds 1.7 times it becomes harder to handle. Therefore, it is provided within the range of 1.3 to 1.7 times.

Here, the first bag and the second bag may be joined by gluing or pressure bonding or the like. This makes it difficult for the first bag to fall off from the second bag. In addition, it is desirable that the opening edge of the second bag is subjected to processing for making the bag easy to open, such as being provided with a hole, corrugated, embossed or the like.

In the excrement disposal bag of the present invention, the outer width of the second bag falls within a range of 1.02 to 1.2 times the inner width of the first bag, and from the outer bottom edge to the opening edge of the second bag is more preferably 1.4 to 1.6 times the inner depth of the first bag.

In the excrement disposal bag of the present invention, two hoop-like handhold portions which extend from the upper portions of side portions of the second bag.

By providing the handhold portions, when inverting the inner and outer of the first bag and the second bag, it is possible to invert by grasping the handhold portions with the hand opposite to the hand inserted into the bag.

Here, handhold portions that are generally used for shopping bags or the like are preferably used for the ring-shaped handhold portions, but other shapes may be used.

In the excrement disposal bag of the present invention, it is preferable that at least one of a deodorant and a fragrance is impregnated in the water-soluble paper constituting the first bag or the synthetic resin constituting the second bag. Therefore, it is possible to reduce malodor in the excrement disposal bag generated after use.

### [Effects of the Invention]

According to the excrement disposal bag of the present invention, it becomes possible to handle easily and to be manufactured at low cost.

### [Brief Description of the Drawings]

Fig. 1 shows a front view of the excrement disposal bag of Embodiment 1.
Fig. 2 shows an explanatory view of the first bag of Embodiment 1.
Fig. 3 shows a front view of the second bag of Embodiment 1, (1) shows a state in which the folded portion is folded inward, and (2) shows a state in which the folded portion is expanded outward.
Fig. 4 shows a usage image 1 of the excrement disposal bag of Embodiment 1.
Fig. 5 shows a usage image 2 of the excrement disposal bag of Embodiment 1.
Fig. 6 shows a usage image of the excrement disposal bag of Embodiment 2.
Fig. 7 shows an example of the front opening edge of the second bag.

### [Best Mode for Carrying Out the Invention]

Embodiments of the present invention will be described in detail below with reference to the drawings. The present invention is not limited to the following embodiment and examples of shown in the figure, and the present invention can be variously changed in design.

### [Embodiment 1]

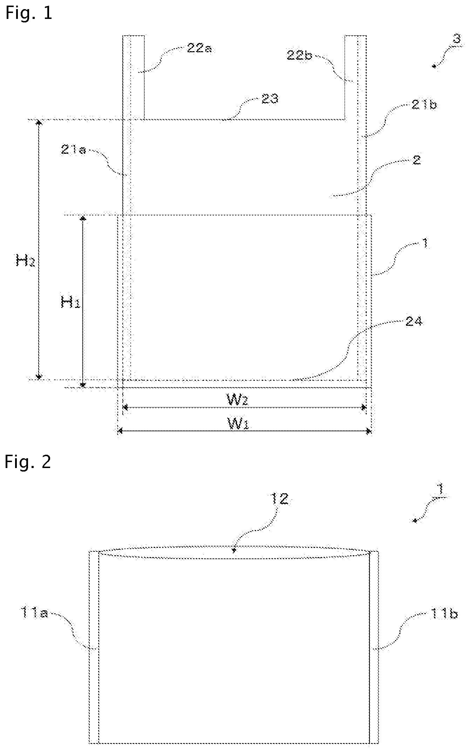

FIG. 1 shows a front view of an excrement disposal bag of Embodiment 1.

As shown in FIG. 1, the excrement disposal bag 3 is composed of a first bag 1 and a second bag 2, and a part of the second bag 2 is accommodated in the first bag 1.

The height H₂ from the bottom edge 24 to the opening edge 23 of the second bag 2 is 1.5 times the height H₁ of the first bag 1. Thus, when grasping pets feces and reversing the first bag 1 and the second bag 2, it is possible to invert without polluting the hand, and a structure that does not require extra material cost.

Moreover, in order to accommodate the second bag 2 inside the bag, the inner width W₁ of the first bag 1 is set to be wider than the outer width W₂ of the second bag 2 in a state where the folded portions (21 a, 21 b) of the second bag 2 are folded. Specifically, the inner width W₁ is 22cm and the outer width W₂ is 20cm.

FIG. 2 is an explanatory view of the first bag of the first embodiment.

As shown in FIG. 2, the first bag 1 is formed in a bag shape by folding the water-soluble paper originally in the form of a rectangle, bonding the left and right sides to each other, and providing bonding portions (11 a, 11 b). The upper side is not glued and it is the opening edge 12.

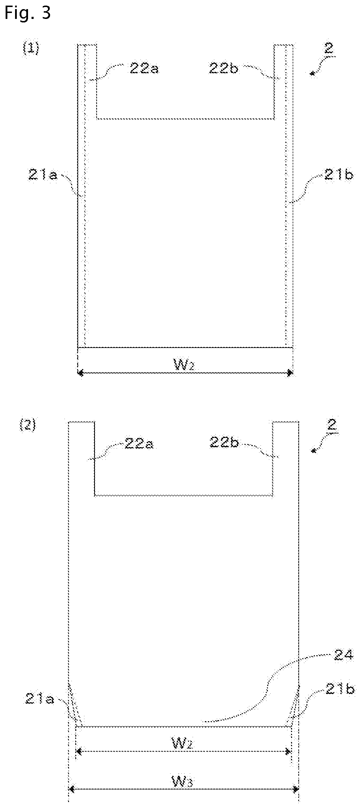

FIG. 3 is a front view of the second bag of Embodiment 1, FIG.3(1) shows a state in which the folded portion is folded inside, and FIG.3(2) shows a state in which the folded portion is expanded outside.

As shown in FIG. 3(1), the second bag 2 has a larger width W₂ in a state where the folded portions (21 a, 21 b) than the outer width W₃ in a state where the folded portion (21 a, 21 b).

Specifically, the outer width W₃ is 24cm. And, since the folded portions (21a, 21b) are crimped in the folded shape at the bottom edge 24, the width of the bottom edge 24 does not expand.

In a state where the folded portion of the second bag 2 is spread outward, the outer width W₃ of the second bag 2 is larger than the inner width W₁ of the first bag 1, the outer width W₃ is provided with an inner width W₁ which is about 1.09 times. Thereby, when using the excrement disposal bag 3, by inserting a hand into the second bag 2 and expanding the second bag 2, it is possible to prevent the space between the first bag 1 and the second bag 2 and moderate frictional force is generated.

This mechanism can be the pets feces can be easily picked up without dropping the first bag 1 from the second bag 2.

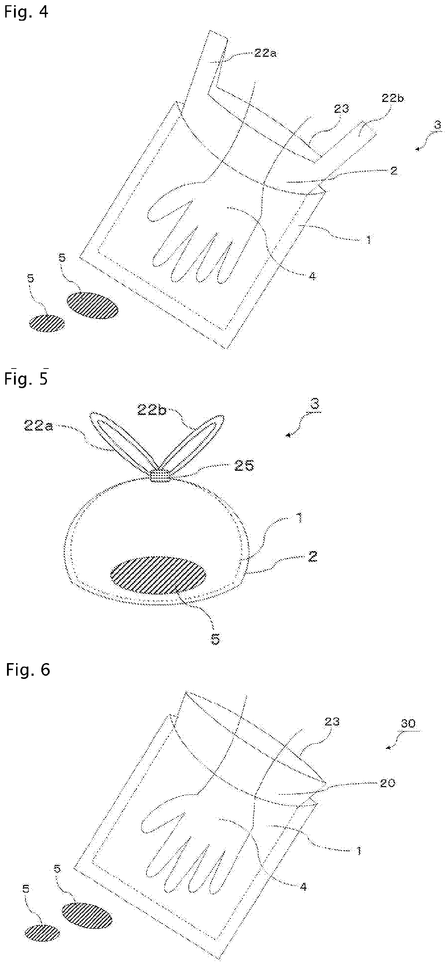

FIG. 4 shows a usage image of the excrement disposal bag of Embodiment 1.

As shown in FIG. 4, in the excrement disposal bag 3, with the second bag 2 accommodated in the first bag 1, the hand 4 is inserted into the second bag 2, and the first pick the feces 5 through the bag 1 and the second bag 2.

Since the first bag 1 is formed by stacking two sheets of water-absorbing paper, even if the feces 5 contain moisture, moisture can be absorbed. Furthermore, since the second bag 2 is made of polyethylene, even if the feces 5 contain moisture, it does not soak into the second bag 2.

When the user holds the feces 5 through the first bag 1 and the handles (22a, 22b) of the second bag 2 or the opening edge 23, and the user reverse the inner and outer sides of the first bag 1 and the second bag 2.

Thus, the feces 5 are accommodated in the inside of the excrement disposal bag 3.

FIG. 5 shows a usage image of the excrement disposal bag of Embodiment 1.

As shown in FIG. 5, the feces 5 are accommodated inside the excrement disposal bag 3. In addition, the knot 25 is formed by connecting the handhold portion 22a and the handhold portion 22b. That is, after inverting the inner and outer sides of the first bag 1 and the second bag 2, the handhold portion 22a and the handhold portion 22b are tied so that odors generated from feces and feces do not leak out. In this way, by providing the handhold portions (22 a, 22 b), it is possible to easily close the opening edge 23.

Further, for example, if it is used during walking, after use, it is possible to take the excrement disposal bag 3 by gripping the hand portions (22 a, 22 b). Since the excrement disposal bag 3 is composed of the first bag made of water-soluble paper and the second bag 2 made of polyethylene, depending on the refuse incineration facility, it can be discarded as it is without sorting is there.

In addition, the first bag 1 is impregnated with a deodorant, occurrence of malodor can be suppressed.

### [Embodiment 2]

FIG. 6 shows a usage image of the excrement disposal bag of Embodiment 2.

As shown in FIG. 6, in the excrement disposal bag 30, unlike the second bag 2 in the first embodiment, the second bag 20 is not provided with the handhold portions.

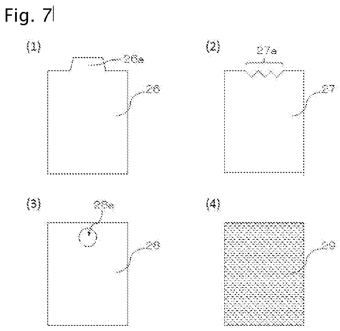

Therefore, when reversing the inner and outer sides of the first bag 1 and the second bag 20, it is necessary to grip the opening edge 23 with the other hand and pull the hand 4 away from the first bag 1 and the second bag 1 reverse the inner and outer of bag 2. With such a configuration, it is easy to manufacture the second bag 20. It is possible to suppress the manufacturing cost.
<A> FIG. 7 is an example of the front opening edge of the second bag, FIG. 7(1) is a trapezoidal shape at the opening edge, FIG. 7(2) is a zigzag shape at the opening edge, FIG. 7(3) round hole processing is applied to the opening edge, and FIG. 7(4) is embossed entirely.
   Four embodiments will be described as examples of the front opening edge of the second bag.
   In the example shown in FIG. 7 (1), the opening edge 26a of the second bag 26 is formed in a trapezoidal shape and has a structure that makes it can be easy to open the bag. In the example shown in FIG. 7 (2), since the opening edge 27a of the second bag 27 is formed in a zigzag shape, there are many corner portions, and this can open the bag easily.
   In the example shown in FIG. 7(3), since the opening edge 28a of the second bag 28 has a round hole, it can be easily opened the bag. In the example shown in FIG. 7 (4), since the second bag 29 is entirely embossed. So, air is likely to enter the inside, and the bag can be easily opened.
<B> In Embodiment 1, the inner width W₁ of the first bag 1 is 22 cm and the outer width W₂ is 20 cm, but other sizes may be used depending on the purpose. For example, the scale of the first bag and the second bag may be 0.5 to 3 times as large as that of the bag described in the first embodiment. For example, excrement disposal bag having a size about 0.5 times as large as the size of the bag shown in Embodiment 1 can be handled easily. It is high convenience when handling feces of a small pet. Conversely, in the case of a large pet such as a large dog, the amount of feces to be processed is large, so that excrement disposal bag having a size about three times the size of the bag shown in Embodiment 1 may be used.

### [Industrial Applicability]

The present invention is useful for tools of handling pets feces.

### [Explanation of sign]

- 1: First bag
- 2, 20, 26 29: Second bag
- 3, 30: Excrement disposal bag
- 4: Hand
- 5: Feces
- 11 a, 11 b: Adhesion portion
- 12: Opening edge
- 21a, 21b: Folded portion
- 22a, 22b: Handhold portion
- 23: Opening edge
- 24: Bottom edge
- 25: Knot
- H: Height
- W₁: Inner width
- W₂, W₃: Outer Width

## Claims

1. An excrement disposal bag comprising:
a first bag made of water-soluble paper, and
a second bag made of synthetic resin and accommodated in the first bag and provided with folded portions at both sides thereof,
under the condition that when the folded portions of the second bag are unfolded outward so that the first bag and the second bag are both made to flatten out,
an outer width of the second bag falls within a range of 1.01 to 1.25 times an inner width of the first bag,
while a height from an outer bottom edge to an opening edge of the second bag falls within a range of 1.3 to 1.7 times an inner depth of the first bag.

2. An excrement disposal bag as set forth in claim 1, further comprising:
the outer width of the second bag falls within a range of 1.02 to 1.2 times the inner width of the first bag, and
the height from the outer bottom edge to the opening edge of the second bag falls within a range of 1.4 to 1.6 times the inner depth of the first bag.

3. An excrement disposal bag as set forth in claim 1 or 2, further comprising two hoop-like handhold portions which extend from the upper portions of side portions of the second bag.

4. An excrement disposal bag as set forth in either one of claim 1 to claim 3 wherein the water-soluble paper constituting the first bag or the synthetic resin constituting the second bag, or both, is impregnated with at least one of a deodorant and a fragrance.
